# EUROPEAN PATENT SPECIFICATION

(11) **EP 0 411 452 B1**
(45) Date of publication and mention of the grant of the patent: **29.11.1995**
(21) Application number: 90114229.9
(22) Date of filing: 25.07.1990
(51) Int. Cl.: B32B 25/04, B32B 21/04

(54) **Low density multilayer marine plywood and synthetic rubber panel and process for manufacture thereof**
Schiffsmehrschichtplatte geringer Dichte aus Sperrholz und synthetischem Kautschuk sowie Prozess zur Herstellung davon
Panneau multicouche marin de densité basse en bois contre-plaqué et caoutchouc synthétique et procédé de fabrication

(30) Priority: 31.07.1989 IT 2153589 U
(43) Date of publication of application: 06.02.1991
(73) Proprietor: Lodi, Adriano, I-20035 Lissone (Milano) (IT)
(72) Inventor: Lodi, Adriano, I-20035 Lissone (Milano) (IT)
(74) Representative: Gervasi, Gemma, Dr.

(56) References cited:
- EP-A- 0 206 834
- GB-A- 225 251
- GB-A- 1 173 586
- GB-A- 1 435 195

## Description

### A.Technology Branch.

The present invention relates to a low density multilayer marine plywood and synthetic rubber panel particularly suitable for use as nonstructural marine construction material and a process for manufacture thereof.

### B. Prior Art.

The applicant has worked for a long time in the industry of plywood and composite materials for completing the interiors of pleasure or fishing craft and is continually seeking materials with high technological performance and low density.

Given the continuously increasing cost of skilled labour necessary for finishing a craft there is clearly interest in having materials which could be prepared directly in the factory in suitable form for installation directly on the craft with no need of fitting or particularly assembling in shipyard.

It is also important to reduce to the maximum the weight of a craft for a given displacement in such a manner as to improve the ratio of the craft's weight to the power of the motors installed.

But allowance must be made for the fact that, especially in the pleasure boat industry, the tradition of using wood for interior finishing of a boat is so deeply rooted as to be practically irreplaceable.

This practical irreplaceability of wood has caused marine builders to seek materials which would improve its performance while continuing the use of wood.

Thus there have been developed in shipyard composite materials such as plywoods having better mechanical resistance and lower density than the final material while using lower quantities of costly woods per surface area unit.

To increase the insulating power of the wood or plywood panels used in the construction of partitions in craft, foamed and/or synthetic sponges are applied on their surfaces with lead inserts or sandwich panels with outer sheet aluminium layers and rock wool or glass wool filling.

These systems however always involve the problem of a high proportion of skilled labour for installation on the craft.

The applicant has perfected among other things a sandwich panel in which two outer layers of plywood enclose an inner layer of foamed PVC. This panel has improved insulation and soundproofing qualities and constitutes a considerable contribution in partition construction but it still displays problems in manufacturing the panel and in the use thereof as a material in the construction of decking or floating dunnages.

### C. The Technical Problem.

The problem of obtaining panels which while maintaining their appearance and workability with commonly used wood-working tools would provide sound absorption, fire and heat resistance, vibration proofing and heat insulation characteristics better than those of the materials heretofore known and used is an objective which has not yet been reached with complete satisfaction and thus there remains open a broad field of research to find new composite materials meeting the construction requirements of shipyards.

Another technical problem of multilayer panels is the fact that until now it has not been possible to produce multilayer panels including at least one layer of marine plywood and using a single forming process therefor.

### D. Detailed Description of the Invention.

It has now been found that it is possible to prepare a multilayer panel having high sound-absorbing, vibration-proofing and heat-insulating qualities while having a density contained within extremely reduced limits and using a very simple forming process which is performed on the same preparation equipment as the panels of marine plywood only.

In accordance with one of its basic characteristics the multilayer panel of the present invention consists of at least one layer of marine plywood having a thickness between 8mm and 15mm and consisting of 5 to 7 layers of wood and at least one layer of synthetic rubber having a thickness between 8mm and 20mm and said layers of synthetic rubber and plywood being joined together by means of an adhesive of structural type, the adhesive being urethane, ureic, ureic modified with melamine, vinyl and cianoacrylic types, and cements and in particular neoprene cements.

The preferred species of wood for the plywood are okoum , mahogany, teak and various other kinds of hardwood.

Among the synthetic rubbers useful in making the panel in accordance with the invention nitrile and neoprene rubbers have proved particularly useful.

In accordance with a preferred form of embodiment of the panel in accordance with the invention the synthetic rubber employed is the self-extinguishing type and is foamed so as to reduce its density to between 70kg/m3 and 120kg/m3 and preferably between 90kg/m3 and 100kg/m3.

In all cases the specific weight of the multilayer panels in accordance with the present invention is between 300kg/m3 and 500kg/m3 and preferably between 330kg/m3 and 400kg/m3.

In accordance with a typical form of embodiment the panel is formed of three layers, i.e. one of synthetic rubber and two of marine plywood enclosing the synthetic rubber layer.

In this form of embodiment using three layers the total thickness of the panel is between 20mm and 40mm, the ratio of the thickness of the synthetic rubber layer to the total thickness of the two layers of plywood being between 0.5:1 and 1.5:1.

In this form of embodiment with three layers the panel is particularly useful for the construction of bulkheads for the engine rooms, dividing bulkheads for cabins and rooms in general, floating dunnage and other forms of insulated flooring.

It will be apparent to those skilled in the art that the multilayer panel for this kind of application can be embodied even with five or more layers being careful to maintain on the outer part of the panels the marine plywood to preserve the wooden appearance of the panel.

Equally apparent will be the possibility of inserting as interior layers of the panel materials other than plywood in order to obtain further improvement of some of the characteristics of the panel such as for example sound-proofing power at low frequencies by insertion of a sheet of lead.

In accordance with another form of embodiment of the panel in accordance with the invention this consists of only two layers of material, one of marine plywood and the other of synthetic rubber.

The two-layer panels are particularly useful for construction of decks for passenger reception halls or floorings resting on layers of welded sheet which have weld beads or other imperfections of the sheet metal. In this case the use of the part of the panel made of synthetic rubber as the supporting surface for the sheet metal permits complete absorption without problems of the thickness of the weld beads or other imperfections.

The advantage of using a 2-layer panel in accordance with the invention is thus clear with the construction of flooring and makes treatment of the surface to be floored with levelling products before setting the flooring, as when using conventional materials, superfluous.

In accordance with another basic characteristic of the present invention the multilayer panels are produced using the same equipment and process already used for forming the plywood.

Particular selection of the adhesives and synthetic rubbers used makes possible the production of a panel with a single hot forming operation by means of which are performed reticulation both of the adhesives used to form the plywood and of those used for bonding of the synthetic rubber layer to the plywood layer.

In accordance with the invention, the multilayer panel is produced by a single forming operation in a hot press during which there is produced simultaneously reticulation of the adhesive which joins the different layers of the plywood together and that which joins the layer of synthetic rubber to the wood.

During the panel formation process the layer of synthetic rubber is made to constitute merely one layer equivalent to any one of the layers of wood used to form the plywood.

Thus the desired panel is produced in a single operation including forming of the layer or layers of plywood and bonding thereof to the layer of synthetic rubber.

In accordance with preferred form of embodiment of the process in accordance with the invention, the marine plywood is prepared in a first phase and in a second phase the multilayer panel is formed by spreading the surface of the plywood with preselected adhesive and assembling the panel with the synthetic rubber and subjecting it again to the reticulation treatment in the press.

The form of embodiment of the process in accordance with the invention is particularly useful because it makes possible the use of phenolic adhesives, which generally cost less than other adhesives, for forming the plywood.

In any case, whether the panel is formed in two steps or in a single step, the multilayer panel in accordance with the invention is formed by subjecting the assembled layers to a pressure between 4 x 10⁵Pa and 18 x 10⁵Pa and a temperature between 60°C and 130°C for a period of time between 10 and 60 minutes.

Having described the basic aspects of the invention an example of production of a panel and determination of its vibrationproofing and soundproofing is given below.

### EXAMPLE

In a plant for the production of sheets of plywood comprising a roller spreader, an assembly bench and a 1000t Pagnani press, the sheets to be included in the plywood are prepared with dimensions of 2.8m and 1.2m consisting of two layers of okom marine plywood, each 8mm thick and made up of five layers of wood glued together with phenolic resin.

The preformed plywood panels are spread with a modified ureic resin sold by BASF under the trademark Coregan 285 at the rate of 200g/m2 of surface area and joined to a sheet of nitrile synthetic rubber having a thickness of 13mm and a density of 100kg/m3.

The panels thus formed are hardened in a press at 90°C for 30 minutes at a pressure of 4 x 10⁵Pa to produce final 3-layer panels, the two outer ones of wood and the inner one of synthetic rubber, with a thickness of 29mm and a specific weight of 340kg/m3.

Three panels produced as described above are assembled together along their longer side so as to form a wall 3.6m x 2.8m which is subjected to the following acoustic tests:
- measurement of sound insulation power when subjected to a white sound having a uniform spectral distribution in the range of audible frequencies filtered at one third of an octave and evaluated in accordance with the method set forth in ISO 717/1; the panel showed an average sound abatement of 27dB between 100Hz and 4000Hz; and
- measurement of the sound radiation efficiency of the bulkhead as set forth in proposed standard ISO 522 (1982).

The measurement is particularly significant for deducing properties of sound radiation due to mechanical excitation as in the case of internal partitions of boats which emit sound because they are excited by the vibrations of the craft.

The efficiency values found for the panel examined for frequencies between 100Hz and 1500Hz are between 10dB and 30dB.

## Claims

1. Low density multilayer marine plywood and synthetic rubber panel consisting of at least one layer of marine plywood having a thickness between 8 mm and 15 mm and consisting of 5 to 7 layers of wood, and at least one layer of synthetic rubber having a thickness of 8 mm to 20 mm, said layers being joined together by an adhesive of urethane, ureic, ureic modified with melamine, vinyl or cyanoacrylic types or cements and in particular neoprene cements.

2. Multilayer panel as described in claim 1, characterised in that said layer of plywood consists of okoum , mahogany, teak.

3. Multilayer panel as described in claim 1, characterised in that said layer of synthetic rubber consists of self-extinguishing nitrile or neoprene rubber and has a density between 70 kg/m3 and 120 kg/m3.

4. Multilayer panel as described in claim 1, characterised in that the layers making up the panel are three, the two outer ones being of marine plywood and the inner one of synthetic rubber and its specific weight is between 300 kg/m3 and 500 kg/m3.

5. Multilayer panel as described in claim 1, characterised in that the total thickness of the panel is between 20 mm and 40 mm, the ratio of the thickness of the synthetic rubber layer to the total thickness of the two layers of plywood being between 0.5:1 and 1.5:1.

6. Process for the production of low density multilayer panels consisting of at least one layer of marine plywood and at least one layer of synthetic rubber characterised in that the assembled layers are subjected to a pressure between 4 x 10⁵Pa and 18 x 10⁵Pa at a temperature between 60°C and 130°C for a period of time between 10 and 60 minutes.

7. Process in accordance with claim 6, characterised in that the multilayer panel is formed in two steps, in the first of said steps there being prepared said layer or layers of marine plywood and in the second step there being glued to said layer or layers of plywood said layer of synthetic rubber.

## Patentansprüche

1. Marines Mehrlagen-Furnierholz mit niedriger Dichte und synthetisches Gummipanel, bestehend aus mindestens einer Lage des marinen Furnierholzes mit einer Dicke von 8 bis 15 mm, und bestehend aus 5 bis 7 Holzlagen, und mindestens einer Lage des synthetischen Gummis mit einer Dicke von 8 bis 20 mm, wobei die Lagen miteinander durch einen Klebstoff vom Urethan-, Ureinsäure-, mit Melamin modifizierter Ureinsäure-, Vinyl- oder Cyanoacryl-Typ oder Zementen und insbesondere Neoprenzementen verbunden sind.

2. Mehrlagen-Panel nach Anspruch 1, dadurch **gekennzeichnet,** dass die Lage aus Furnierholz aus Okoum, Mahagoni oder Teak besteht.

3. Mehrlagen-Panel nach Anspruch 1, dadurch **gekennzeichnet,** dass die Schicht aus synthetischem Gummi aus selbsterlöschendem Nitril- oder Neoprengummi besteht und eine Dichte von 70 bis 120 kg/m³ hat.

4. Mehrlagen-Panel nach Anspruch 1, dadurch **gekennzeichnet,** dass die das Panel bildenden Lagen drei sind, wobei die äusseren beiden aus marinem Furnierholz und die innere aus synthetischem Gummi sind und ihr spezifisches Gewicht 300 bis 500 kg/m³ ist.

5. Mehrlagen-Panel nach Anspruch 1, dadurch **gekennzeichnet,** dass die Gesamtdicke des Panels 20 bis 40 mm, das Verhältnis der Dicke der synthetischen Gummilage zur Gesamtdicke der beiden Lagen aus Furnierholz 0,5:1 bis 1,5:1 ist.

6. Verfahren zur Herstellung von Mehrlagen-Panelen mit niedriger Dichte, bestehend aus mindestens einer Lage von marinem Furnierholz und mindestens einer Lage eines synthetischen Gummis, dadurch **gekennzeichnet,** dass die aufeinandergelegten Lagen einem Druck von 4 x 10⁵ bis 18 x 10⁵ Pa bei einer Temperatur von 60 bis 130°C für einen Zeitraum von 10 bis 60 Minuten ausgesetzt werden.

7. Verfahren nach Anspruch 6, dadurch **gekennzeichnet,** dass das Mehrlagen-Panel in zwei Schritten gebildet wird, wobei im ersten dieser Schritte die Lage oder Lagen des marinen Furnierholzes hergestellt werden und im zweiten Schritt an diese Lage oder Lagen von Furnierholz die Lage synthetischen Gummis geleimt wird.

## Revendications

1. Panneau multicouche basse densité en contre-plaqué marin et en caoutchouc synthétique constitué d'au moins une couche de contre-plaqué marin ayant une épaisseur comprise entre 8 mm et 15 mm et constituée de 5 à 7 couches de bois, et d'au moins une couche de coutchouc synthétique ayant une épaisseur comprise entre 8 mm et 20 mm, lesdites couches étant jointes l'une à l'autre par un adhésif de type uréthanne, uréique, uréique modifié par la mélamine, vinyle ou cyanoacrylique ou par des ciments et en particulier des ciments néoprène.

2. Panneau multicouche comme décrit dans la révendication 1, caractérisé en ce que ladite couche de contre-plaqué est constituée de bois d'okoumé, d'acajou ou de teck.

3. Panneau multicouche comme décrit dans la revendication 1, caractérisé en ce que ladite couche de caoutchouc synthétique est constituée par un caoutchouc nitrile ou néoprène auto-extinguible et a une densité comprise entre 70 kg/m³ et 120 kg/m³.

4. Panneau multicouche comme décrit dans la revendication 1, caractérisé en ce que les couches formant les panneaux sont au nombre de trois, les deux extérieures étant en contreplaqué marin et l'intérieure en caoutchouc synthétique, et son poids spécifique est compris entre 300 kg/m³ et 500 kg/m³.

5. Panneau multicouche comme décrit dans la revendication 1, caractérisé en ce que l'épaisseur totale du panneau est comprise entre 20 mm et 40 mm, le rapport de l'épaisseur de la couche de caoutchouc synthétique à l'épaisseur totale des deux couches étant compris entre 0,5:1 et 1,5:1.

6. Procédé de fabrication de panneaux multicouches basse densité constitués d'au moins une couche de contre-plaqué marin et d'au moins une couche de caoutchouc synthétique, caractérisé en ce que les couches assemblées sont soumises à une pression comprise entre 4 x 10⁵ Pa et 18 x 10⁵ Pa à une température comprise entre 60°C et 130°C pendant une durée comprise entre 10 et 60 minutes.

7. Procédé selon la revendication 6, caractérisé en ce que le panneau multicouche est formé en deux étapes, la première desdites étapes comprenant la préparation de ladite couche ou desdites couches de contre-plaqué marin et la deuxième étape comprenant le collage de ladite couche de caoutchouc synthétique à ladite ou auxdites couches de contre-plaqué.
